Europäisches Patentamt

European Patent Office

Office européen des brevets

(19)

(11) **EP 1 040 376 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **G02B 6/20**, B01J 19/12, A61C 19/00

(21) Anmeldenummer: **98965098.1**

(22) Anmeldetag: **01.12.1998**

(86) Internationale Anmeldenummer:
**PCT/DE98/03572**

(87) Internationale Veröffentlichungsnummer:
**WO 99/032912 (01.07.1999 Gazette 1999/26)**

(54) **UVC-FLÜSSIGKEITSLICHTLEITER**

UVC LIQUID LIGHT GUIDE

CONDUCTEUR OPTIQUE LIQUIDE

(84) Benannte Vertragsstaaten:
**AT CH DE GB LI**

(30) Priorität: **15.12.1997 DE 29722130 U**
**17.07.1998 DE 19832277**

(43) Veröffentlichungstag der Anmeldung:
**04.10.2000 Patentblatt 2000/40**

(73) Patentinhaber: **Nath, Gunther**
**82031 Munchen (DE)**

(72) Erfinder: **Nath, Gunther**
**82031 Munchen (DE)**

(74) Vertreter: **Fritsche, Rainer, Dipl.-Wirtsch.-Ing.**
**Eisenführ, Speiser & Partner**
**Patentanwälte**
**Arnulfstrasse 25**
**80335 München (DE)**

(56) Entgegenhaltungen:
WO-A-95/12138         DE-A- 4 014 363
DE-A- 4 233 087         US-A- 5 165 773

**Beschreibung**

Die vorliegende Erfindung betrifft einen neuen Flüssigkeitslichtleiter für die Übertragung von UVC-Strahlung, im Wellenlängenbereich von etwa 220nm -280nm. Der UVC-Lichtleiter kann an eine nicht kohärente Strahlungsquelle für UVC-Strahlung, wie z. B. eine Hg-Mitteldrucklampe angekoppelt werden, wobei die vom Lichtleiter emittierte UVC-Strahlung z.B. zum photochemischen Aushärten von Klebern oder Lacken verwendet werden kann. Vorzugsweise ist der Lichtleiter flexibel.

UVC-Lichtleiter sind seit langem bekannt. Sie bestehen aber im Gegensatz zum beanspruchten Flüssigkeitslichtleiter aus flexiblen Glasfaserbündeln. Die einzelnen Fasern dieser Bündel bestehen aus synthetischem Quarzglas (Brechzahl $n_1$) und sind mit einem fluordotiertem Quarzglas (Brechzahl $n_2$) ummantelt, wobei ein maximaler optischer Aperturwinkel $2\alpha$ von etwa 25° (sin $\alpha = \sqrt{n_1^2 - n_2^2}$) erreicht werden kann.

Derartige Quarzglas-Faserbündel-Lichtleiter werden z.B. von der Firma Schott hergestellt, sind sehr teuer und können wegen ihres geringen Aperturwinkels nur einen relativ kleinen Raumwinkelanteil eines inkohärenten UVC-Strahlers erfassen.

Es wäre daher wünschenswert, wenn man für die Übertragung von UVC-Strahlung Flüssigkeitslichtleiter, bestehend aus einem flüssigen Kern und einem Mantel aus Plastik, verwenden könnte, welche größere optische Aperturwinkel aufweisen und somit eine höhere Übertragungskapazität erlauben, und möglicherweise auch billiger herzustellen sind.

Der seit über 20 Jahren auf dem Markt befindliche Flüssigkeitslichtleiter für die Übertragung von UVA-Strahlung, bestehend aus einem Teflon® FEP Schlauch, gefüllt mit einer wässrigen CaCl$_2$-Lösung (n = 1,435) wie in P 24 06 424 beschrieben, weist zwar im UVA-Bereich (320nm-400nm) eine hohe Transmission und gute photochemische Stabilität auf, ist aber infolge photochemischer Zersetzung, z.B. bei $\lambda = 250$ nm nicht für die Übertragung von UVC-Strahlung geeignet.

Durch Verschiebung des pH-Wertes der wässrigen CaCl$_2$-Lösung vom sauren in den alkalischen Bereich kann man die photochemische Stabilität und somit die Konstanz der Transmission bis in den UVB-Bereich hinein (280nm-320nm) ausdehnen, (siehe DE OS 195 18 147 oder US-Patent 5.737.473). Aber selbst diese stabilisierte Lösung zersetzt sich bei intensiver Bestrahlung im UVC-Bereich.

In der deutschen Patentanmeldung DE-OS 40 14 363. 5 werden Flüssigkeitslichtleiter mit alternativen Flüssigkeiten für stabile Übertragung von Strahlung im UVB Bereich angegeben, die aus der Gruppe der wässrigen Phosphatlösungen stammen, wie z.B. wässrige Lösungen aus K$_3$PO$_4$, K$_2$HPO$_4$, KH$_2$PO$_4$, NaH$_2$PO$_4$ und Na$_2$HPO$_4$.

Nachteilig ist bei diesen Lösungen, daß sich der optische Brechungsindex wegen Salzausfalls in der Kälte nicht so hoch einstellen läßt wie bei den Lösungen bestehend aus CaCl$_2$ / H$_2$O, so daß der maximale optische Aperturwinkel unbefriedigend ist. Ein weiterer Nachteil dieser wässrigen Phosphatlösungen besteht darin, daß sie einen partiellen Wasserdampfdruck besitzen, der wesentlich über dem der wässrigen CaCl$_2$ - Lösungen liegt, so daß die Flüssigkeitslichtleiter mit Phosphatlösungen in Teflon® FEP Schläuchen trotz der äußerst geringen H$_2$O-Dampfpermeabilität der Fluorkohlenstoff-Polymere bereits nach ca. einem Jahr Bläschen entwickeln, was für die Strahlungstransmission prohibitiv ist.

Nachdem die Firma DuPont und später die Firma Ausimont neue hochtransparente und extrem niedrig brechende Fluorpolymere auf den Markt gebracht haben (Teflon® AF, Hyflon® AD), ist es möglich geworden, totalreflektierende Innenoberflächen bei Flüssigkeitslichtleitern zu verwenden, deren Brechungsindex wesentlich niedriger ist, als der von Teflon® FEP. Dadurch erhalten die Flüssigkeitslichtleiter mit Phosphatlösungen akzeptable maximale Aperturwinkel $2\alpha$ im Bereich von über 50°.

Da mit diesen neuen "amorphen" Fluorpolymeren von Dupont und Ausimont aus flüssiger Phase ein Teflon® Schlauch innen beschichtet werden kann, wirken sie auch als Politur für die Innenflächen der extrudierten Teflon® Schläuche, so daß vor allem für kurzwellige UV-Strahlung die Reflexionsbedingungen verbessert werden.

In den DE-OS 40 24 445 und 42 33 087 sowie der GP PS 2 248 312 werden Flüssigkeitslichtleiter beschrieben, welche Teflon® AF als innere Manteloberfläche verwenden. In der DE-OS 40 24 445 wird erwähnt, daß Fluoridlösungen, wie z.B. KF in H$_2$O, für kurzwellige UV-Strahlung geeignet sind. Fluoridlösungen haben allerdings den Nachteil, daß die erreichbaren und praktikablen Brechungsindices der Lösungen nicht wesentlich über dem Wert von n = 1,35-1,36 liegen, und daß diese Lösungen außerdem die beiden Quarzglasstöpsel, mit denen die Flüssigkeitslichtleiter an beiden Enden abgedichtet werden, anlösen. Da diese Quarzstöpsel jedoch als optische Fenster dienen, wird ihre optische Transmission durch Anlösen der polierten Glasflächen beeinträchtigt.

Es galt also, aus der Vielzahl der in der Literatur erwähnten möglichen Lichtleiterflüssigkeiten für den UVA- und UVB-Bereich , eine Flüssigkeit zu finden, welche sogar noch im UVC-Bereich als Lichtleiterflüssigkeit verwendet werden kann.

Hierbei sind folgende Eigenschaften für die Flüssigkeit erforderlich:

1. Die Flüssigkeit sollte im UVC-Bereich (280nm $\geq \lambda \geq 220$nm) transparent sein, und zwar bei Schichtdicken bis zu 2000mm. Anders ausgedrückt: die Transparenz im UVC-Bereich sollte möglichst nahe an der von Reinstwasser liegen.

2. Die Flüssigkeit für UVC-Lichtleiter sollte einen Brechungsindex haben, der mindestens so hoch ist, daß ein optischer Aperturwinkel 2$\alpha$ von etwa 50° zu erreichen ist. Dieser Wert soll erreicht werden bei einem Brechungsindex der total reflektierenden Manteloberfläche von n =1,29 - 1,325. Nur dann sind die Biegeverluste eines Lichtleiters mit typisch 5mm lichtaktivem Durchmesser noch akzeptabel.

3. Die Flüssigkeit sollte sich über lange Zeiträume bei Dauerbestrahlung mit einer UVC-Lichtquelle (z. B. einer Hg-Mitteldrucklampe) nicht zersetzen, d.h. die Flüssigkeit muß in dem extrem photochemisch aktiven UVC-Bereich stabil bleiben. Diese Forderung hängt eng mit der Forderung 1. zusammen. Organische Flüssigkeiten (mit Ausnahme weniger zu niedrig brechender perfluorierter Flüssigkeiten) weisen im UVC-Bereich keine photochemische Stabilität auf und entfallen somit als Lichtleiterflüssigkeit in diesem Spektralbereich.

4. Der mit der UVC-Flüssigkeit gefüllte Flüssigkeitslichtleiter sollte Temperaturen bis mindestens -10°C ohne Salzausfall überstehen.

5. Es wäre wünschenswert, wenn die Flüssigkeit aus markt- und sicherheitstechnischen Gründen außerdem noch physiologisch unbedenklich wäre.

Aus der Vielzahl der in der Literatur für den UVA- und UVB-Bereich erwähnten Lichtleiterflüssigkeiten hat sich für den UVC-Bereich nur eine einzige Flüssigkeit als geeignet erwiesen, nämlich eine wässrige Lösung von $NaH_2PO_4$.

Um dies zu veranschaulichen, wurden UV-Transmissionsmessungen von verschiedenen wässrigen Salzlösungen durchgeführt, wobei die Schichtdicke 10 cm betrug, und für jede Salzlösung ein Brechungsindex von n = 1,335 eingestellt wurde, also ein Wert, der nur 2/1000 über dem von $H_2O$ liegt. Für diese Messungen wurden nur Substanzen der höchsten Reinheitsstufe (suprapur) verwendet, einschließlich des Lösungsmittels $H_2O$. Die spezifischen Salze sind der Patentliteratur für UVB-Flüssigkeitslichtleiter entnommen. Man kann auf diese Weise sehr genau die absolute Lage der jeweiligen UV-Absorptionskante ermitteln, wobei eventuell noch vorhandene Verunreinigungen im ppm-Bereich sich in der Lage der UV-Kante nicht mehr bemerkbar machen.

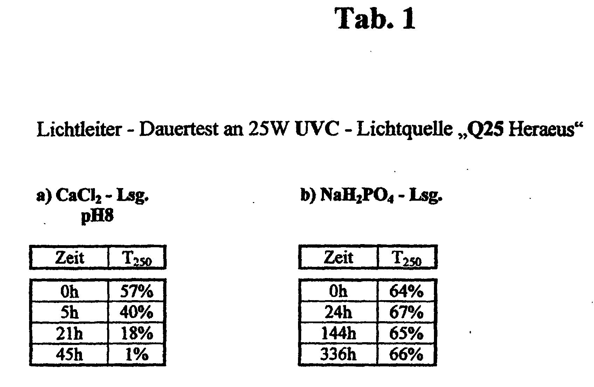

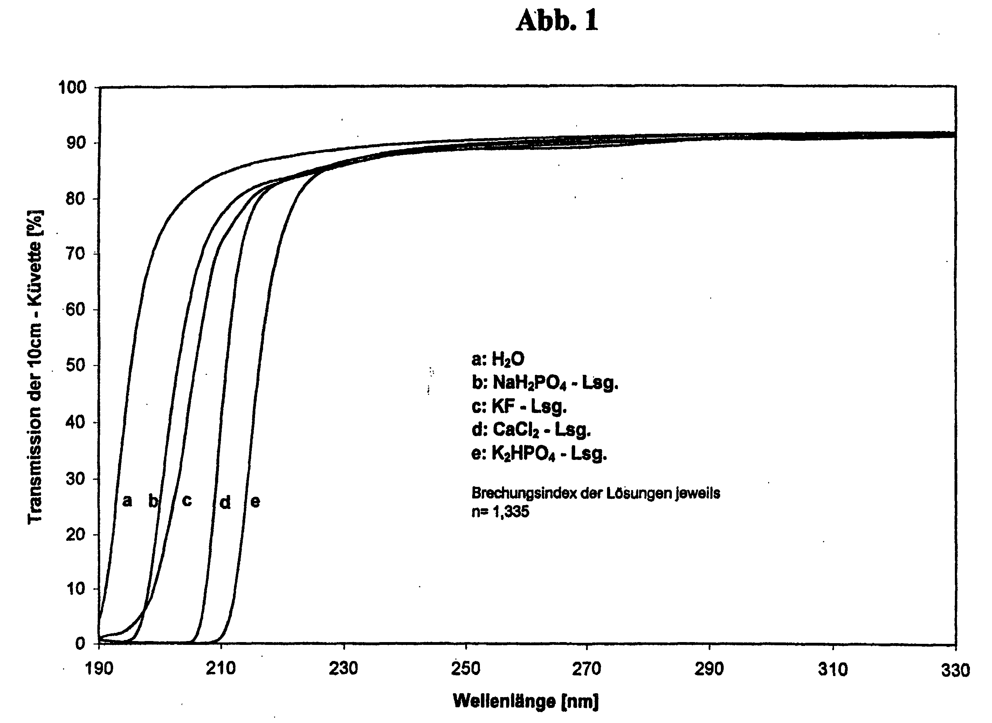

Die Abbildung 1 zeigt die relative Lage der UV-Abfallkanten der gemessenen Salzlösungen zueinander und auch in Relation zu der UV-Absorptionskante von Reinstwasser. Aus Abbildung 1 ist auch zu entnehmen, daß die aus dem UVA- und UVB-Bereich bekannten Salzlösungen auch für den UVC-Bereich geeignet sein könnten, weil deren Transparenz im Bereich von 220nm-280nm in etwa vergleichbar gut ist.

Es hat sich aber herausgestellt, daß mit einer Ausnahme, nämlich $NaH_2PO_4/H_2O$, alle anderen Flüssigkeiten gravierende Nachteile aufweisen.

So reagieren die wässrigen Lösungen von $K_2HPO_4$ (wegen ihrer starken Basizität) und KF (wegen der Anwesenheit von HF) mit den Oberflächen der Quarzglasfenster. Als Folge davon treten nach ca. einem Jahr Trübungen an den optischen Fenstern auf, welche die Transmission der Lichtleiter stark reduzieren. Außerdem weisen hochkonzentrierte Lösungen von KF nur geringe Brechungsindices ($\leq$ 1,36) auf, so daß nur unzureichende Aperturwinkel erreichbar sind. Darüber hinaus sind sie physiologisch bedenklich.

Wässrige Lösungen aus $CaCl_2$ sind - wie eingangs erwähnt - im UVC-Bereich photochemisch nicht stabil. Bei einem Dauerbestrahlungsversuch eines Flüssigkeitslichtleiters auf Basis von $CaCl_2/H_2O$ mit einer ungefilterten 25-Watt Hg-Hochdrucklampe, sinkt nämlich die Transmission des Lichtleiters bei $\lambda$ = 250nm ($T_{250}$) schon nach 45 Stunden von ursprünglich 57% auf 1% ab. (siehe Tabelle 1a)

Die bereits erwähnten Salzlösungen auf Phosphatbasis, nämlich $K_3PO_4$, $KH_2PO_4$ und $Na_2HPO_4$ erfüllen ebenfalls nicht die gestellten Kriterien. Die Löslichkeiten von $KH_2PO_4$ und $Na_2HPO_4$ in $H_2O$ sind so gering, daß keine auch nur annähernd brauchbaren Brechungsindices erreicht werden können. Darüber hinaus sind wässrige Lösungen von $K_3PO_4$ noch basischer als Lösungen von $K_2HPO_4$, so daß auch in diesem Fall die optischen Quarzglasfenster angelöst werden.

Aus der Vielzahl der beschriebenen Salzlösungen verbleibt somit lediglich die wässrige Lösung von $NaH_2PO_4$. Überraschenderweise hat sich nämlich herausgestellt, daß diese Lösung von $NaH_2PO_4$ alle Kriterien 1.-5. in befriedigender Weise erfüllt. Darüber hinaus ist die Transparenz im Vergleich zu den Lösungen c-e der Abbildung 1 optimal.

Die DE 42 33 087 A beschreibt einen Flüssigkeitslichtleiter mit einer lichtleitenden Na $H_2$ $PO_4$ - Lösung.

Ein Aperturwinkel von mindestens 50° läßt sich mit dieser $NaH_2PO_4$ -Lösung erreichen, da ein Brechungsindex im Bereich von n = 1,38-1,39 einstellbar ist. Eine solche Lösung bleibt auch bei -10°C stabil, d. h. es findet kein Salzausfall statt. Außerdem ist die $NaH_2PO_4$-Lösung im UVC-Bereich photochemisch stabil. Ein Dauerbestrahlungsversuch eines Flüssigkeitslichtleiters mit der $NaH_2PO_4/H_2O$ -Lösung (n = 1,38) mit einer 25-Watt UVC-Lichtquelle von bis zu 336 Stunden zeigt eine konstante Transmission von etwa 65% bei der Testwellenlänge $\lambda$ = 250nm. (siehe Tab.1b)

Darüber hinaus ist die Lösung physiologisch unbedenklich, und da sie sauer reagiert (pH = 4-5), werden auch nicht die Quarzglasfenster angelöst.

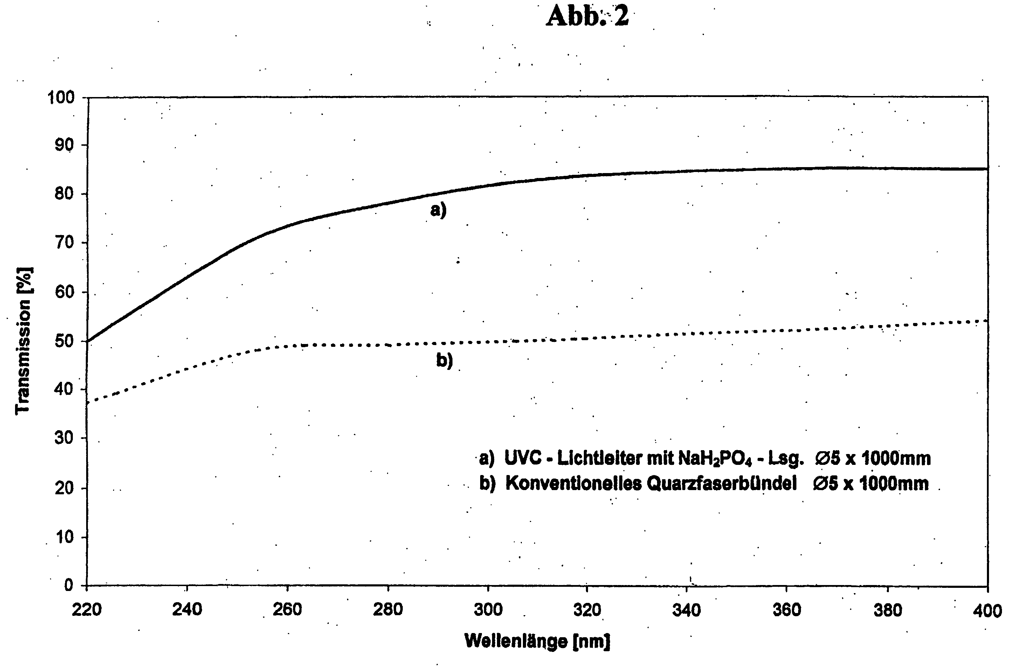

Abbildung 2 zeigt die optische Transmissionskurve eines UVC-Flüssigkeitslichtleiters mit 1000mm Länge und einem lichtaktiven Kem von 5mm Durchmesser, bestehend aus einem Teflon® FEP Schlauch ($\emptyset_i$ = 5mm; $\emptyset_a$ = 6mm), gefüllt mit einer wässrigen $NaH_2PO_4$ Lösung (n = 1,38). Der FEP-Schlauch ist auf seiner Innenoberfläche mit einer 3$\mu$ dicken Teflon® AF 1600-Schicht (n = 1,31) beschichtet. Der Lichtleiter ist an beiden Enden durch zylindrische $SiO_2$-Fenster abgedich-

tet. Der einfallende Mess-Strahl hatte eine Divergenz von 25°. Die gestrichelte Kurve in Abb.2 zeigt vergleichsweise die Transmission eines Quarzfaserbündel UVC-Lichtleiters mit gleicher Dimension und unter gleichen Messbedingungen. Man erkennt die deutliche Überlegenheit des UVC-Flüssigkeitslichtleiters.

Der einzige Nachteil, den der Flüssigkeitslichtleiter mit der $NaH_2PO_4$ -Lösung aufweist, besteht darin, daß der partielle Wasserdampfdruck der Lösung mit n = 1,38-1,39 einer relativen Feuchte von etwa 80% entspricht. Bei einer relativen Feuchte der Umgebung von üblicherweise etwa 60% gibt es eine wenn auch sehr langsame Diffusion von $H_2O$-Dampf durch die Wand des Teflon® FEP-Schlauches in die Atmosphäre. Als Folge dieser Diffusion von Wasserdampf durch die permeable Plastikwand entstehen in dem erfindungsgemäßen UVC-Lichtleiter nach 9-12 Monaten Bläschen mit der Folge einer rapiden Transmissionsabnahme. Dieser Diffusionsprozess von $H_2O$-Dampf durch die Schlauchwand des Lichtleiters kann verlangsamt werden, wenn man die Wandstärke des Teflon® FEP-Schlauches, die üblicherweise aus Gründen der Flexibilität zwischen 3/10mm und 5/10mm liegt, auf mehr als das Doppelte erhöht. Die bläschenfreie Lebensdauer des Lichtleiters würde so proportional mit der Verdickung der Wandstärke des Teflonschlauches erhöht werden. Allerdings muß dann eine Reduzierung der Flexibilität des Lichtleiters in Kauf genommen werden.

Die Aufgabe der Erfindung bestand also darin, ausgehend von der DE 42 33 087A, einen Flüssigkeitskichtleiter zu finden, der eine lange Lebensdames aufweist. Diese Aufgabe wird gemäß des Erfindung durch den im Anspruch 1 definierten Flüssigkeitsleiter gelöst. Ein Verfahren zur Herstellung eines derartigen Flüssigkeitslichtleiters wird in Anspruch 9 definiert.

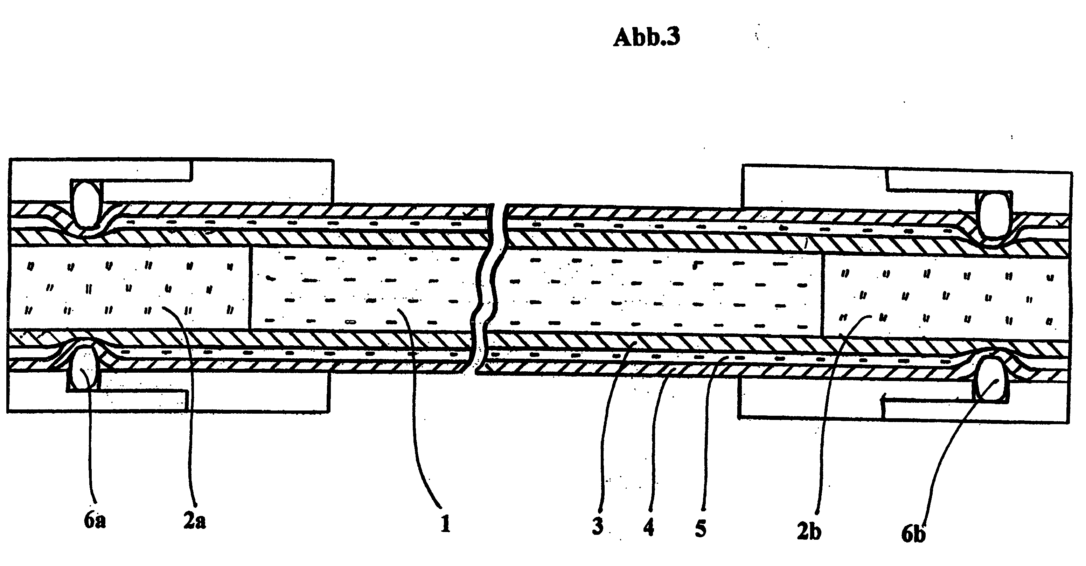

Zur Erhöhung der Lebensdauer des UVC-Lichtleiters mit $NaH_2PO_4$ -Lösung Stellt man den Lichtleiter in einer konzentrischen Anordnung aus zwei Teflonschläuchen her, wobei sich im Raum zwischen den beiden Teflonschläuchen, der nur wenige 1/10 mm betragen kann, Wasser oder eine wässrige Lösung befindet, deren partieller Wasserdampfdruck größer ist als der der lichtleitenden $NaH_2PO_4$-Lösung im inneren Teflonschlauch. Eine derartige Anordnung ist in Abb.3 dargestellt. Die $NaH_2PO_4$ -Lösung 1 befindet sich im Innern des FEP-Schlauches 3, der an beiden Enden durch zylindrische Quarzglasstöpsel 2a, 2b abgedichtet ist. Der FEP Schlauch 3 hat typische Maße: 5mm $\varnothing_i$; 6mm $\varnothing_a$

Konzentrisch zu dem FEP-Schlauch 3 ist ein zweiter FEP-Schlauch 4 angeordnet, der z.B. die Maße 6,4 $\varnothing_i$ ; 7,0 $\varnothing_a$ hat, also dünnwandiger ist als der innere FEP-Schlauch 3 und einen Zwischenraum 5 bildet von im Mittel 2/10 mm. Sowohl der Außenschlauch 4 als auch der Innenschlauch 3 sind durch eine einzige O-Ring-Dichtung 6a, 6b mit den Abschlußfenstem 2a und 2b flüssigkeitsdicht verpreßt. Statt der O-Ringe 6a, 6b können auch metallische Krimphülsen verwendet werden, wobei mit einem Krimpwerkzeug und einer einzigen Krimphülse beide Schläuche 3 und 4 gleichzeitig mit dem jeweiligen Fenstern 2a oder 2b verpreßt werden. In dem Raum 5 zwischen den beiden Schläuchen 3 und 4 befindet sich Wasser oder eine wässrige Lösung, deren partieller Wasserdampfdruck größer ist als der der lichtleitenden $NaH_2PO_4$-Lösung. Der innere FEP Schlauch 3 ist auf seiner Innenoberfläche in hier nicht dargestellter Weise mit einer ca. 3μ dicken Teflon® AF-Schicht ausgekleidet oder einer Schicht aus einem anderen hochtransparenten, perfluorierten Material, dessen Brechungsindex kleiner als 1,33 ist, wie z.B. Hyflon® AD.

Wichtig für die Erhöhung der Lebensdauer des $NaH_2PO_4$-UVC-Lichtleiters auf den Zeitraum von 5-10 Jahren, auch in Ländern mit geringer Feuchte (Kalifornien), ist die Tatsache, daß nicht nur der Innenschlauch 3 aus einem Fluorkohlenstoff-Polymer, wie Teflon® FEP, Hyflon® MFA oder THV (3M), besteht, sondern auch der äußere Schlauch 4, weil unter den flexiblen Plastikschläuchen, so wie sie für Flüssigkeitslichtleiter erforderlich sind, solche aus Fluorkohlenstoff-Polymeren die geringsten Permeabilitäten für Wasserdampf aufweisen. Der Schlauch 4 kann eine Wandstärke besitzen, die nur 2/10 - 5/10 mm beträgt, weil die Wasserschicht in dem Raum zwischen den Schläuchen 3 und 4 durchaus Bläschen bekommen darf. Die Wirkung der konzentrischen Schlauchanordnung ist nämlich auch dann gegeben, wenn der Raum zwischen den Schläuchen 3 und 4 nur partiell mit Wasser gefüllt ist. Außerdem reduziert ein im Vergleich zu Schlauch 3 dünnwandigerer Schlauch 4 die Flexibilität des Lichtleiters nur unwesentlich. Um die Wirksamkeit der Doppel-Teflonschlauch-Anordnung zu verifizieren, wurde folgender Versuch gemacht:

Ein UVC-Lichtleiter in folgender Ausführung:

Innenschlauch 3: Teflon® FEP: 5$\varnothing_i$ x 6$\varnothing_a$ x 3000
Füllung 1: $NaH_2PO_4$ in $H_2O$, n = 1,38
Außenschlauch 4: Teflon® FEP: 6,4$\varnothing_i$ x 7,0$\varnothing_a$ x 3000
Flüssigkeit zwischen Schlauch 3 und 4: $H_2O$

wurde in einem Dauerversuch im Wärmeofen auf 50°C gehalten. Ebenso wurde ein Kontrolllichtleiter behandelt mit identischem Innenschlauch 3 und identischer Füllung 1 aber ohne Außenschlauch 4 und somit auch ohne Wasserschicht 5. Während der Doppelschlauch-Lichtleiter auch nach 6 Monaten noch keine Blasenbildung und somit auch noch konstante Transmission aufwies, zeigten sich bei dem Kontrolllichtleiter bereits nach zwei Wochen Bläschen, die rasch größer wurden.

Da bei dem eben beschriebenen Wärmetest die Wasserdampf-Diffusionsprozesse wesentlich beschleunigt werden, erlaubt dieser Test eine zulässige Extrapolation der Lebensdauer des erfindungsgemäßen UVC-Lichtleiters auf mehrere Jahre unter normalen Umgebungsbedingungen.

Die Herstellung des erfindungsgemäßen Doppelschlauch-Lichtleiters mit $H_2O$-Zwischenschicht läuft wie folgt ab:

Erster Schritt: Der Außenschlauch 4, der eine beliebige Länge haben kann wird zunächst mit $H_2O$ gefüllt und an einem Ende abgedichtet.

Zweiter Schritt: Die Innenseele des Lichtleiters bestehend aus Schlauch 3, lichtleitender Flüssigkeit 1 und den Fenstern 2a und 2b wird in konventioneller Weise hergestellt.

Dritter Schritt: Die Innenseele wird in den mit $H_2O$ gefüllten Außenschlauch 4 hineingeschoben bis zur Bündigkeit der beiden Schlauchenden, wobei Wasser aus Schlauch 4 verdrängt wird.

Vierter Schritt: An der Bündigkeitsstelle wird die erste Dichtung in Form einer O-Ring Quetsche oder einer Krimphülse angebracht, so daß beide konzentrische Schlauchenden einseitig mit dem Lichtleiterfenster verpresst sind.

Fünfter Schritt: Schlauch 4 wird in etwa bündig mit dem zweiten Lichleiterfenster bzw. dem Ende von Schlauch 3 abgeschnitten.

Sechster Schritt: Die zweite Dichtung kann jetzt analog der ersten durchgeführt werden. Die nahezu vollständig mit $H_2O$ ausgefüllte Zwischenschicht 5 ergibt sich aufgrund dieser Vorgehensweise ohne Schwierigkeiten von selbst.

**Patentansprüche**

1. Flüssigkeitslichtleiter für den UVC-Bereich von 220 bis 280 nm, umfassend einen inneren Lichtleiterschlauch (3) aus einem Fluorkohlenstoffpolymer, bevorzugt Teflon® FEP oder Hyflon® MFA, welcher eine totalreflektierende Innenbeschichtung aus einem Fluorpolymer aufweist, deren Brechungsindex unterhalb von 1,333 liegt, wobei der innere Lichtleiterschlauch (3) eine wässrige Lösung von $NaH_2PO_4$ enthält, **dadurch gekennzeichnet, dass** der innere Lichtleiterschlauch (3) ummantelt ist und sich zwischen Mantel (4) und innerem Lichtleiterschlauch (3) Wasser (5) oder eine wässrige Lösung (5) befindet, deren partieller Wasserdampfdruck größer als oder gleich ist wie der der lichtleitenden wässrigen Lösung von $NaH_2PO_4$.

2. Flüssigkeitslichtleiter nach Anspruch 1, **dadurch gekennzeichnet, dass** die lichtleitende Flüssigkeit (1) einen Brechungsindex von unter 1,40 aufweist.

3. Flüssigkeitslichtleiter nach Anspruch 2, **dadurch gekennzeichnet, dass** die wässrige Lösung eine Konzentration von 2,5 bis 6,5 mol/l $NaH_2PO_4$ aufweist.

4. Flüssigkeitslichtleiter nach einem der vorhergehenden Ansprüche, **dadurch gekennzeichnet, dass** der Innendurchmesser des Mantels (4) maximal 1 mm, vorzugsweise nicht mehr als 0,5mm, größer ist als der Außendurchmesser des Lichtleiterschlauchs (3) und dass der Mantel (4) ebenfalls ein Schlauch ist, welcher konzentrisch um den Lichtleiterschlauch (3) angeordnet ist.

5. Flüssigkeitslichtleiter nach einem der vorhergehenden Ansprüche, **dadurch gekennzeichnet, dass** der Mantelschlauch (4) ein Fluorpolymer enthält oder aus diesem besteht.

6. Flüssigkeitslichtleiter nach Anspruch 5 **dadurch gekennzeichnet, dass** der Mantelschlauch (4) aus Teflon® FEP, Teflon® PTFE, Hyflon® MFA, Teflon® PFA, Teflon® PCTFE, Teflon® ETFE, THV (3M) oder einem Fluorelastomer besteht.

7. Flüssigkeitslichtleiter nach einem der Ansprüche 4 bis 6, **dadurch gekennzeichnet, dass** die Wandstärke des Mantelschlauchs (4) geringer ist als die Wandstärke des Lichtleiterschlauchs (3).

8. Flüssigkeitslichtleites nach einem vorhergehenden Ansprüche **dadurch gekennzeichnet, dass** der Lichtleiterschlauch (3) zusammen mit dem Mantelschlauch (4) mit einer einzigen Krimphülse oder einer einzigen O-Ring-Quetschdichtung (6a, 6b) mit den zylindrischen Quarzfenstern (2a, 2b) des Lichtleiters verpresst ist.

9. Verfahren zur Herstellung eines UVC- Flüssigkeitslichtleiters nach einem der vorhergehenden Ansprüche, wobei

a) der innere Lichtleiterschlauch (3) mit der wässrigen $NaH_2PO_4$-Lösung gefüllt und an beiden Enden mit Quarzstöpseln abgedichtet wird;

b) der äußere Mantelschlauch (4) an einem Ende abgedichtet und mit Wasser oder einer wässrigen Lösung gefüllt wird;

c) der innere Lichtleiterschlauch (3) in den äußeren, mit Wasser oder Lösung gefüllten Mantelschlauch (4) hineingeschoben wird, bis Bündigkeit besteht, wobei er Wasser bzw. Lösung aus dem äußeren Mantelschlauch (4) verdrängt;

d) an der Bündigkeitsstelle eine erste Dichtung in Form einer O-Ring Quetsche (6a, 6b) oder einer Krimphülse angebracht wird, so dass beide konzentrischen Schlauchenden einseitig mit dem ersten Lichtleiterfenster verpresst sind; e) der äußere Mantelschlauch (4) mit dem zweiten Lichtleiterfenster in etwa bündig abgeschnitten und die zweite Dichtung analog der ersten Dichtung angebracht wird.

## Claims

1. Liquid light guide for the UVC range between 220 and 280 nm, comprising an inner light guide tube (3) made of a fluorocarbon polymer, preferably Teflon® FEP or Hyflon® MFA, having a totally reflecting fluoropolymer inner coating with a refractive index less than 1.333, wherein the inner light guide tube (3) contains an aqueous solution von $NaH_2PO_4$, **characterized in that** the inner light guide tube (3) is sheathed and that, between the sheath (4) and said inner light guide tube (3), water (5) or an aqueous solution (5) is disposed which has a partial water vapor pressure which is greater than or equal to that of the light guiding aqueous solution of $NaH_2PO_4$.

2. Liquid light guide according to claim 1, **characterized in that** the light guiding fluid (1) has a refractive index of less than 1.40.

3. Liquid light guide according to claim 2, **characterized in that** the aqueous solution has a concentration of between 2.5 and 6.5 mol/l $NaH_2PO_4$.

4. Liquid light guide according to one of the preceding claims, **characterized in that** the inner diameter of the sheath (4) does not exceed the outer diameter of the light guide tube (3) by more than 1 mm, preferably by not more than 0.5 mm, and that the sheath (4) is also a tube disposed concentrically around the light guide tube (3).

5. Liquid light guide according to one of the preceding claims, **characterized in that** the sheath tube (4) contains or is comprised of a fluoropolymer.

6. Liquid light guide according to claim 5, **characterized in that** the sheath tube (4) is made of Teflon® FEP, Teflon® PTFE, Hyflon® MFA, Teflon® PFA, Teflon® PCTFE, Teflon® ETFE, THV (3M) or a fluoroelastomer.

7. Liquid light guide according to one of claims 4 to 6, **characterized in that** the sheath tube (4) has a wall thickness that is less than the wall thickness of the light guide tube (3).

8. Liquid light guide according to one of the preceding claims, **characterized in that** the light guide tube (3), together with the sheath tube (4), is press-connected with the cylindrical silica glass windows (2a, 2b) of the light guide by means of a single crimp bushing or single O-ring squeeze seal (6a, 6b).

9. Method for making a UVC liquid light guide according to one of the preceding claims, wherein

   a) the inner light guide tube (3) is filled with the aqueous $NaH_2PO_4$ solution and is sealed at both ends with silica glass stoppers; b) the outer sheath tube (4) is sealed at one end and filled with water or an aqueous solution; c) the inner light guide tube (3) is inserted into the outer sheath tube (4), which is filled with water or solution, until they are flush with each other, thereby displacing water or solution from the outer sheath tube (4); d) a first seal in the form of an O-ring squeeze seal (6a, 6b) or crimp bushing is attached at the flush position such that both concentric tube ends are press-connected with the first light guide window; e) the outer sheath tube (4) is cut off approximately flush with the second light guide window, and the second seal is attached in a manner analogous to the first seal.

## Revendications

1. Fibre optique à liquide pour la plage UVC de 220 à 280 nm, comprenant un flexible intérieur de fibre optique (3) à base d'un polymère de fluorocarbone, de préférence du Téflon® FEP ou Hyflon® MFA, qui présente un revêtement interne entièrement réfléchissant à base d'un polymère fluoré, dont l'indice de réfraction est inférieur à 1,333, le flexible intérieur de fibre optique (3) contenant une solution liquide de $NaH_2PO_4$, **caractérisée en ce que** le flexible intérieur de fibre optique (3) est gainé et entre la gaine (4) et le flexible intérieur de fibre optique (3) se trouve de l'eau (5) ou une solution aqueuse (5), dont la pression partielle de vapeur d'eau est supérieure ou égale à celle de la solution aqueuse conductrice de lumière de $NaH_2PO_4$.

2. Fibre optique à liquide selon la revendication 1, **caractérisée en ce que** le liquide (1) conducteur de lumière présente un indice de réfraction inférieur à 1,40.

3. Fibre optique à liquide selon la revendication 2, **caractérisée en ce que** la solution aqueuse présente une concentration de 2,5 à 6,5 moles/l de $NaH_2PO_4$.

**4.** Fibre optique à liquide selon l'une quelconque des revendications précédentes, **caractérisée en ce que** le diamètre intérieur de la gaine (4) est plus grand au maximum de 1 mm, de préférence pas plus de 0,5 mm, que le diamètre extérieur du flexible de fibre optique (3) et **en ce que** la gaine (4) est également un flexible, qui est disposé de façon concentrique autour du flexible de fibre optique (3).

**5.** Fibre optique à liquide selon l'une quelconque des revendications précédentes, **caractérisée en ce que** le flexible de gaine (4) contient un polymère fluoré ou est constitué d'un tel polymère.

**6.** Fibre optique à liquide selon la revendication 5, **caractérisée en ce que** le flexible de gaine (4) est à base de Téflon® FEP, Téflon® PTFE, Hyflon® MFA, Téflon® PFA, Téflon® PCTFE, Téflon® ETFE, THV (3M) ou d'un élastomère fluoré.

**7.** Fibre optique à liquide selon l'une quelconque des revendications 4 à 6, **caractérisée en ce que** l'épaisseur de paroi du flexible de gaine (4) est inférieure à l'épaisseur de paroi du flexible de fibre optique (3).

**8.** Fibre optique à liquide selon l'une quelconque des revendications précédentes, **caractérisée en ce que** le flexible de fibre optique (3) est comprimé en même temps que le flexible de gaine (4) avec une douille à sertir unique ou un joint torique unique d'étanchéité et de compression (6a, 6b) avec les fenêtres de quartz (2a, 2b) cylindriques de la fibre optique.

**9.** Procédé pour la fabrication d'une fibre optique à liquide UVC selon l'une quelconque des revendications précédentes, dans lequel

    a) le flexible intérieur de fibre optique (3) est rempli de solution aqueuse de $NaH_2PO_4$ et est étanchéifié aux deux extrémités avec des bouchons de quartz ;
    b) le flexible de gaine (4) extérieur est étanchéifié au niveau d'une extrémité et est rempli d'eau ou de solution aqueuse ;
    c) le flexible intérieur de fibre optique (3) est introduit dans le flexible de gaine (4) extérieur rempli d'eau ou de solution, jusqu'à ce qu'on ait un affleurement, moyennant quoi il refoule de l'eau ou de la solution hors du flexible extérieur de gaine (4) ;
    d) un premier joint est disposé au point d'affleurement sous la forme d'un écrasement de joint torique (6a, 6b) ou d'une douille à sertir, de sorte que les deux extrémités concentriques de flexible soient comprimées sur un côté avec la première fenêtre de guidage de lumière ;

    e) le flexible de gaine (4) extérieur est coupé à peu près en affleurement avec la deuxième fenêtre de guidage de lumière et le deuxième joint est disposé de la même façon que le premier joint.

# Tab. 1

Lichtleiter - Dauertest an 25W UVC - Lichtquelle „Q25 Heraeus"

a) $CaCl_2$ - Lsg.
   pH8

| Zeit | $T_{250}$ |
|------|-----------|
| 0h   | 57%       |
| 5h   | 40%       |
| 21h  | 18%       |
| 45h  | 1%        |

b) $NaH_2PO_4$ - Lsg.

| Zeit | $T_{250}$ |
|------|-----------|
| 0h   | 64%       |
| 24h  | 67%       |
| 144h | 65%       |
| 336h | 66%       |

# Abb. 1

a: $H_2O$
b: $NaH_2PO_4$ - Lsg.
c: KF - Lsg.
d: $CaCl_2$ - Lsg.
e: $K_2HPO_4$ - Lsg.

Brechungsindex der Lösungen jeweils
n= 1,335

EP 1 040 376 B1

Abb. 2

Transmission [%]

Wellenlänge [nm]

a) UVC - Lichtleiter mit $NaH_2PO_4$ - Lsg.  Ø5 x 1000mm
b) Konventionelles Quarzfaserbündel  Ø5 x 1000mm

a)

b)

10

Abb.3